# EUROPEAN PATENT SPECIFICATION

(11) **EP 4 383 365 B1**
(45) Date of publication and mention of the grant of the patent: **24.12.2025**
(21) Application number: 23212718.3
(22) Date of filing: 28.11.2023
(51) Int. Cl.: H01M 4/133, H01M 4/36, H01M 4/48, H01M 4/587, H01M 4/62, H01M 10/0525, H01M 4/131, H01M 4/1391, H01M 4/1393

(54) **NEGATIVE ACTIVE MATERIAL FOR RECHARGEABLE LITHIUM BATTERY AND RECHARGEABLE LITHIUM BATTERY INCLUDING SAME**
NEGATIVES AKTIVMATERIAL FÜR EINE WIEDERAUFLADBARE LITHIUMBATTERIE UND WIEDERAUFLADBARE LITHIUMBATTERIE DAMIT
MATÉRIAU ACTIF NÉGATIF POUR BATTERIE AU LITHIUM RECHARGEABLE ET BATTERIE AU LITHIUM RECHARGEABLE LE COMPRENANT

(30) Priority: 06.12.2022 KR 20220169138
(43) Date of publication of application: 12.06.2024
(73) Proprietor: Samsung SDI Co., Ltd., Yongin-si, Gyeonggi-do 17084 (KR)
(72) Inventor: YOUM, Chul, 17084 Yongin-si (KR)
(74) Representative: Marks & Clerk LLP

(56) References cited:
- US-A1- 2013 209 881
- US-A1- 2020 119 336
- US-A1- 2020 148 545
- US-B2- 9 905 842

## Description

### BACKGROUND

### 1. Field

Embodiments relate to a negative active material for a rechargeable lithium battery and a rechargeable lithium battery including the same.

### 2. Description of the Related Art

Recently, the rapid increase in electronic devices such as mobile phones, laptop computers, and electric vehicles using batteries has resulted in a surprising increase in demand for relatively high-capacity and light-weight rechargeable batteries.

US 2020/119336 A1 relates to a nonaqueous electrolyte secondary battery including a positive electrode, a negative electrode, separators, and a nonaqueous electrolyte.

US 2013/209881 A1 relates to a negative active material and a lithium battery including the negative active material.

US 9905842 B2 relates to a negative active material for a rechargeable lithium battery that includes a silicon-based active material including a core including carbon and SiOₓ particles (0.5≤x≤1.5); and a coating layer surrounding the core, and a negative electrode and a rechargeable lithium battery including the same.

US 2020/148545 A1 relates to particulate composite materials comprising a graphitic core particle associated with SiO_{X} nanoparticles (0.2≤X≤1.8), and coated by a layer of non-graphitic carbon, e.g., pyrolytic carbon deposited by chemical vapor deposition.

### SUMMARY

A negative active material for a rechargeable lithium battery is recited in claim 1, the negative active material including a porous amorphous carbon matrix having a porosity of 10 % to 64 %, wherein the porosity is measured by a BJH method using a nitrogen adsorption method, silicon oxide distributed in pores of the porous amorphous carbon matrix, and a coating layer on a surface of the porous amorphous carbon matrix, the coating layer including an amorphous carbon. Further embodiments are directed to:

The negative active material for a rechargeable lithium battery wherein the amorphous carbon matrix may include a hard carbon matrix or a soft carbon matrix.

The negative active material for a rechargeable lithium battery wherein the amorphous carbon matrix may include a hard carbon matrix.

The negative active material for a rechargeable lithium battery wherein the silicon oxide may be SiOₓ, where x is 0.9 to 2.0.

The negative active material for a rechargeable lithium battery wherein the porosity of the porous amorphous carbon matrix may be 10 % to 60 %.

The negative active material for a rechargeable lithium battery wherein the silicon oxide may have a particle diameter of 1 nm to 100 nm, wherein the particle diameter is an average particle diameter measured by a particle size analyzer, a transmission electron microscopic image, a scanning electron microscopic image, or a dynamic light-scattering measurement device.

The negative active material for a rechargeable lithium battery wherein an amount of the silicon oxide may be 10 wt% to 60 wt% based on 100 wt% of the negative active material.

The negative active material for a rechargeable lithium battery wherein an amount of the coating layer may be 1 wt% to 20 wt% based on 100 wt% of the negative active material.

The negative active material for a rechargeable lithium battery wherein the amorphous carbon in the coating layer may include soft carbon.

The negative active material for a rechargeable lithium battery wherein the silicon oxide may be amorphous silicon oxide.

A method of preparing a negative active material for a rechargeable lithium battery is recited in claim 11, the method including adding a porous amorphous carbon matrix having a porosity of 10 % to 64 % to a liquid silane compound to prepare a mixture, wherein the porosity is measured by a BJH method using a nitrogen adsorption method, defoaming the mixture to prepare a defoamed product, mixing the defoamed product with an amorphous carbon precursor to prepare a mixed product, and heat-treating the mixed product. Further embodiments are directed to:

The method of preparing a negative active material for a rechargeable lithium wherein the porosity of the porous amorphous carbon matrix may be 10 % to 60%.

The method of preparing a negative active material for a rechargeable lithium wherein the amorphous carbon matrix may include a hard carbon matrix or a soft carbon matrix.

The method of preparing a negative active material for a rechargeable lithium battery wherein the silane compound may include tetraalkyl orthosilicate, tetraalkoxysilane, silicon tetrachloride, or combinations thereof.

The method of preparing a negative active material for a rechargeable lithium battery wherein the heat-treatment may be performed at 600 °C to 1,000 °C.

The method of preparing a negative active material for a rechargeable lithium battery wherein the defoamed product may be distributed in a solvent before being mixed with the amorphous carbon precursor.

The method of preparing a negative active material for a rechargeable lithium battery wherein the solvent may include water.

A rechargeable lithium battery is recited in claim 15 which includes a negative electrode including the negative active material, a positive electrode, and an electrolyte.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 shows a schematic drawing of a negative active material for a rechargeable lithium battery according to some embodiments; and
FIG. 2 shows an exploded, perspective view, of a rechargeable lithium battery according to some embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

As used herein, the term "soft carbon" refers to graphitizable carbon materials and are readily graphitized by heat treatment at a high temperature, e.g., 2800 °C, and "hard carbon" refers to non-graphitizable carbon materials and are slightly graphitized by heat treatment.

A negative active material for a rechargeable lithium battery includes a porous amorphous carbon matrix having a porosity of about 10 % to about 64 % and a coating layer on a surface of the matrix. The coating layer includes an amorphous carbon and the pores of amorphous carbon matrix include silicon oxide therein.

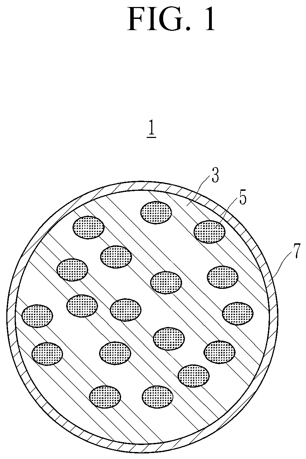

Such a negative active material is schematically shown in FIG. 1. The negative active material 1 includes the porous amorphous carbon matrix 3, silicon oxide 5 distributed in the pores, and a coating layer 7 including an amorphous carbon.

The amorphous carbon matrix may be a hard carbon matrix or a soft carbon matrix. According to some embodiments, the amorphous carbon matrix may be the hard carbon matrix.

The silicon oxide may be SiOₓ, where x is about 0.9 to about 2.0 (e.g. SiO₂).

As described above, silicon oxide is present in the pores of the amorphous carbon, e.g., in a hard carbon matrix or a soft carbon matrix. Because hard and soft carbon matrices rarely expand during charging and discharging, the amorphous carbon matrix may physically suppress the volume expansion of silicon during charging and discharging. This may improve the cycle-life characteristics of the silicon-based negative active material. The volume suppression effect of the carbon matrix may be realized by using either a hard carbon matrix or a soft carbon matrix. The effect may not be sufficiently obtained by using a crystalline carbon such as graphite.

The silicon oxide may have a particle diameter (e.g. an average particle diameter, such as D50) of about 1 nm to about 100 nm, about 2 nm to about 90 nm, or about 3 nm to about 50 nm. If the particle diameter of silicon oxide is within these ranges, stress on the amorphous carbon matrix due to the volume expansion of the active material may be dispersed. The volume suppression effect of the porous hard carbon matrix or porous soft carbon matrix may thereby be improved.

The porous amorphous carbon matrix includes at least one pore and has a porosity of about 10 % to about 64%, for example, about 10 % to about 60 %, about 10% to about 50%, about 20% to about 50%, about 30% to about 50%, or about 40% to about 50%. If the porosity of the porous amorphous carbon matrix is within these ranges, the silicon oxide may be sufficiently stored in the pores and the matrix form of the amorphous carbon may be maintained during charge and discharge, and thus, excellent capacity, charge and discharge efficiency, and cycle-life characteristics may be exhibited. The porosity is measured by a BJH method using a nitrogen adsorption method.

In some embodiments, an amount of the silicon oxide may be about 10 wt% to about 60 wt%, about 20 wt% to about 55 wt%, or about 30 wt% to about 50 wt% based on 100 wt% of the negative active material. If the amount of silicon oxide is within these ranges, the porous amorphous carbon matrix may be well maintained without increases in the irreversible capacity, the volume expansion of the active material may be suppressed, and charge and discharge capacity may be increased.

An amount of the coating layer may be about 1 wt% to about 20 wt%, about 2 wt% to about 15 wt%, or about 3 wt% to about 10 wt% based on 100 wt% of the negative active material. If the amount of coating layer is within these ranges, the improved conductivity, as a result of the coating layer, may be effectively obtained without a decrease in charge and discharge capacity or an increase in resistance.

The silicon oxide may be amorphous. The inclusion of amorphous silicon oxide in the negative active material may prevent the structure from breaking, despite repeated charging and discharging, resulting in improved cycle-life characteristics.

In some embodiments, the amorphous carbon included in the coating layer may be soft carbon.

Such a negative active material according to one or more embodiments may be prepared by the following procedures.

A porous amorphous carbon matrix including at least one pore is added to a liquid silane compound to prepare a mixture. The amorphous carbon matrix may be a hard carbon matrix or a soft carbon matrix. According to some embodiments, the amorphous carbon matrix may be the hard carbon matrix.

The porous amorphous carbon matrix has a porosity of about 10 % to about 64 %, for example, about 10 % to about 60 %, about 10 % to about 50 %, about 20% to about 50%, about 30% to about 50%, or about 40% to about 50%.

The addition may be performed by distributing the porous amorphous carbon matrix in the liquid silane compound.

A mixing ratio of the porous amorphous carbon matrix and the liquid silane compound may be appropriately adjusted depending on the porosity of the porous amorphous carbon matrix, e.g., the mixing ratio may be appropriately adjusted so that there is sufficient liquid silane compound to fill the pores of the porous amorphous carbon matrix.

If a liquid-type silane compound is used as a silicon source, the amorphous silicon oxide may penetrate the pores of the porous amorphous carbon matrix in a suitable amount. If a vapor-type silane compound is used, the pores of the porous amorphous carbon matrix may be blocked, and the silane compound may be undesirably deposited on a surface of the porous amorphous carbon matrix. If a pulverized solid-type silane compound is used, the silane may be unable to penetrate the pores of the porous amorphous carbon matrix, and the volume expansion of the silane compound during charge and discharge may not be physically constrained by the porous amorphous carbon matrix.

The silane compound may be tetraalkyl orthosilicate, tetraalkoxysilane, silicon tetrachloride, or combinations thereof. The tetraalkyl orthosilicate may be tetramethyl orthosilicate, tetraethyl orthosilicate, tetrapropyl orthosilicate, or combinations thereof (e.g. tetramethyl orthosilicate, tetraethyl orthosilicate, or combinations thereof). The tetraalkoxy silane may be tetramethoxysilane, tetraethoxysilane, tetrabutoxysilane, or combinations thereof.

The mixture is defoamed in order to prepare a defoamed product. The defoaming may be performed by a vacuum reduced pressure process. The defoaming may remove air from the pores of the matrix, allowing the liquid silane compound to penetrate into the pores.

The defoaming may be performed under a vacuum condition. The pressure of the vacuum condition may be about 10⁻³ MPa to about 10⁻⁶ MPa. If the vacuum condition is within this pressure range, air in the pores may be sufficiently removed, thereby allowing the liquid silane compound to substantially and sufficiently penetrate the pores of the amorphous carbon matrix.

The resulting defoamed product is mixed with an amorphous carbon precursor.

A mixing ratio of the defoamed product and the amorphous carbon precursor may range from about 80:20 to 99:1 by weight ratio. A mixing ratio of the defoamed product and the amorphous carbon within this range may ensure that the amorphous carbon is not included in the final negative active material in an excessive amount, and thus, may enable more suitable utilization of silicon, which leads to exhibition of excellent initial efficiency.

The amorphous carbon precursor may include coal pitch, petroleum pitch, mesophase pitch, meso carbon pitch, coal-based oil, petroleum-based heavy oil, tar, coal-based cokes, petroleum-based cokes, green cokes, low-molecular weight heavy oil, or a polymer resin such as a phenol resin, a furan resin, a polyimide resin, or the like. In some embodiments, the amorphous carbon precursor may include coal pitch, petroleum pitch, mesophase pitch, tar, coal-based cokes, petroleum-based cokes, green cokes, low-molecular weight heavy oil, or combinations thereof which may be used for preparing soft carbon.

In some embodiments, after defoaming and before mixing with the amorphous carbon precursor, the defoamed product may be dispersed in a solvent. The solvent may include water. If the defoamed product is dispersed in a solvent, e.g., water, a coupling reaction may occur and the silane compound may be converted into SiOₓ. Because it is difficult for water to completely penetrate the hard carbon matrix, silane compound present in a central portion of the hard carbon matrix may not be converted into SiOₓ. If the defoamed product is dispersed in a solvent, a filtration and a drying may be further performed.

The obtained product is heat-treated. The heat-treatment may be performed at about 600 °C to about 1,000 °C (e.g. about 600 °C to about 800 °C, or about 600 °C to about 700 °C). The heat-treatment may be performed under an atmosphere of an argon, nitrogen, or combinations thereof. The heat-treatment may be performed for about 3 hours to about 9 hours (e.g. about 4 hours to about 8 hours, or about 5 hours to about 7 hours).

The heat-treatment may allow the silane compound to link as a polymer, e.g., the coupling reaction may completely occur, and the silane compound in the pores of the amorphous carbon matrix may be completely converted into SiOₓ and may be positioned as silicon oxide in the pores.

As a result of the heat-treatment, the amorphous carbon precursor may be converted into the amorphous carbon which may be positioned as a coating layer surrounding a surface of the carbon matrix.

Another embodiment provides a rechargeable lithium battery including a negative electrode, a positive electrode, and an electrolyte.

The negative electrode may include a current collector and a negative active material layer formed on the current collector and including the negative active material according to embodiments.

The negative active material layer may include the negative active material according to some embodiments as a first negative active material and crystalline carbon as a second negative active material. A mixing ratio of the first negative active material and the second negative active material may be a weight ratio of about 1:99 to about 50:50. In another embodiment, the negative active material may include the first negative active material and the second negative active material at a weight ratio of about 5:95 to about 20:80.

In the negative active material layer, an amount of the negative active material may be about 95 wt% to about 98 wt% based on the total 100 wt% of the negative active material layer.

The negative active material layer may include a binder, and may further include a conductive material. The amount of the binder may be about 1 wt% to about 5 wt% based on the total 100 wt% of the negative active material layer. The amount of the conductive material may be about 1 wt% to about 5 wt% based on the total 100 wt% of the negative active material layer.

The binder may improve binding properties of negative active material particles with one another as well as with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, polyester resin, an acrylic resin, a phenolic resin, an epoxy resin, polyvinyl alcohol, or combinations thereof.

If the aqueous binder is used as a negative electrode binder, a cellulose-based compound may be further used to provide viscosity as a thickener. The cellulose-based compound may include one or more of carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material may provide electrode conductivity, and any electrically conductive material may be used as a conductive material unless it causes a chemical change. The conductive material may be, e.g., a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include, e.g., a copper foil, a nickel foil, a stainless steel foil, a titanium foil, a nickel foam, a copper foam, a polymer substrate coated with a conductive metal, and a combination thereof, but is not limited thereto.

The positive electrode may include a current collector and a positive active material layer formed on the current collector.

The positive electrode active material may include lithiated intercalation compounds that reversibly intercalate and deintercalate lithium ions. In some embodiments, one or more composite oxides of a metal selected from cobalt, manganese, nickel, and a combination thereof, and lithium, may be used. In some implementations, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{d}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulae, A is selected from Ni, Co, Mn, or combinations thereof; X is selected from Al, Ni, Co, Mn, Cr, Fe, Mg, Sr, V, a rare earth element, and combinations thereof; D¹ is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof; L¹ is selected from Mn, Al, or combinations thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In embodiments, the positive active material layer may further include a binder and a conductive material. The binder and the conductive material may be included in an amount of about 1 wt% to about 5 wt%, respectively based on the total amount of the positive active material layer.

The binder may improve the binding properties of positive active material particles with one another as well as with a current collector. The binder may be, e.g., polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may include Al, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dibutyl acetate, methyl propionate, ethyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The organic solvent may be used alone or in a mixture. If the organic solvent is used in a mixture, the mixture ratio may be controlled in accordance with a desirable battery performance, and it may be well known to those skilled in the related art.

The carbonate-based solvent may desirably include a mixture with a cyclic carbonate and a linear carbonate. The cyclic carbonate and linear carbonate are mixed together in a volume ratio of about 1:1 to about 1:9, and if the mixture is used as an electrolyte, it may have enhanced performance.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

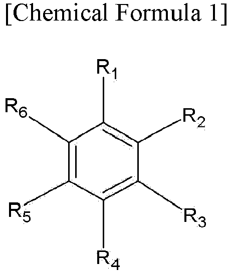

In Chemical Formula 1, R₁ to R₆ may be the same or different and may each be selected from hydrogen, a halogen, a C1 to C10 alkyl group, a haloalkyl group, or a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combinations thereof.

The electrolyte may further include vinylethyl carbonate, vinylene carbonate, an ethylene carbonate-based compound represented by Chemical Formula 2 as an additive for improving cycle life.

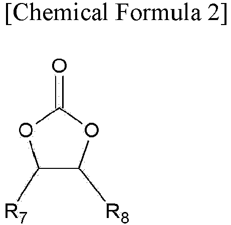

In Chemical Formula 2, R₇ and R₈ may be the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN (CₓF₂ₓ₊₁SO₂)(C_{y}F_{2y+1}SO₂), wherein x and y are natural numbers, e.g., an integer of about 1 to about 20, lithium difluoro(bisoxalato) phosphate), LiCl, LiI, LiB(C₂O₄)₂ (lithium bis(oxalato) borate: LiBOB) and lithium difluoro(oxalate)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be between the positive electrode and the negative electrode depending on a type of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

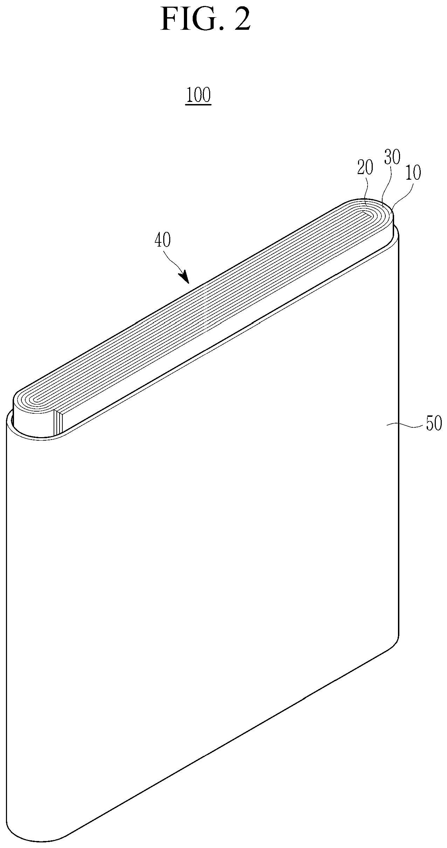

FIG. 2 is an exploded perspective view of a rechargeable lithium battery according to an embodiment. The rechargeable lithium battery according to some embodiments is illustrated as a prismatic battery but may include variously-shaped batteries such as a cylindrical battery, a pouch battery, and the like.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### (Example 1)

A porous hard carbon matrix (porosity: 10%) was added to a liquid tetraethyl orthosilicate (TEOS) to prepare a mixture.

The mixture was defoamed by vacuum reducing pressure of 10⁻⁶ MPa pressure.

The defoamed product was distributed in water.

The obtained product and meso pitch were mixed at a weight ratio of 90: 10, and the resulting mixture was heat-treated at 600 °C for 5 hours under a N₂ atmosphere to prepare a negative active material.

The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 81 wt%, an amount of the silicon oxide was 9 wt%, and an amount of the soft carbon coating layer was 10 wt%. The silicon oxide had a particle diameter of 5 nm.

97.5 wt% of the prepared negative active material, 1 wt% of carboxymethyl cellulose, and 1.5 wt% of a styrene butadiene rubber were mixed in a water solvent to prepare a negative active material layer slurry.

The negative active material slurry was coated on a Cu foil current collector, dried, and pressurized to prepare a negative electrode including the current collector and a negative active material layer formed on the current collector.

Using the negative electrode, a counter electrode, and an electrolyte, a rechargeable lithium cell was fabricated. As the electrolyte, 1M LiPF₆ dissolved in a mixed solvent of ethylene carbonate and dimethyl carbonate (3:7 volume ratio) was used.

### (Example 2)

A negative active material was prepared by the same procedure as in Example 1, except that a porous hard carbon matrix with a porosity of 50 % was used. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 45 wt%, an amount of the silicon oxide was 45 wt%, and an amount of the soft carbon coating layer was 10 wt%. The silicon oxide had a particle diameter of 5 nm.

The negative active material was used to fabricate a negative electrode and a half-cell by the same procedure as in Example 1.

### (Example 3)

A negative active material was prepared by the same procedure as in Example 1, except that a porous hard carbon matrix with a porosity of 60 % was used. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 36 wt%, an amount of the silicon oxide was 54 wt%, and an amount of the soft carbon coating layer was 10 wt%. The silicon oxide had a particle diameter of 5 nm.

The negative active material was used to fabricate a negative electrode and a half-cell by the same procedure as in Example 1.

### (Example 4)

A negative active material was prepared by the same procedure as in Example 1, except that a porous soft carbon matrix with a porosity of 50 % was used. The prepared negative active material had a porous soft carbon matrix, silicon oxide (SiOₓ, where x is 2) positioned in the pores of the soft carbon matrix, and a soft carbon coating layer on a surface of the soft carbon matrix. An amount of the soft carbon matrix was 45 wt%, an amount of the silicon oxide was 45 wt%, and an amount of the soft carbon coating layer was 10 wt%. The silicon oxide had a particle diameter of 5 nm.

The negative active material was used to fabricate a negative electrode and a half-cell by the same procedure as in Example 1.

### (Example 5)

A negative active material was prepared by the same procedure as in Example 1, except that a porous hard carbon matrix with a porosity of 50 % and liquid tetramethylorthosilicate (TMOS) were used. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 45 wt%, an amount of the silicon oxide was 45 wt%, and an amount of the soft carbon coating layer was 10 wt%. The silicon oxide had a particle diameter of 5 nm.

The negative active material was used to fabricate a negative electrode and a half-cell by the same procedure as in Example 1.

### (Example 6)

A negative active material was prepared by the same procedure as in Example 2, except that the obtained product and meso pitch were mixed at a weight ratio of 99:1. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 49.5 wt%, an amount of the silicon oxide was 49.5 wt%, and an amount of the soft carbon coating layer was 1 wt%. The silicon oxide had a particle diameter of 5 nm. The negative active material was used to fabricate a negative electrode and a half-cell by the same procedure as in Example 1.

### (Example 7)

A negative active material was prepared by the same procedure as in Example 2, except that the obtained product and meso pitch were mixed at a weight ratio of 80:20. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 40 wt%, an amount of the silicon oxide was 40 wt%, and an amount of the soft carbon coating layer was 20 wt%. The silicon oxide had a particle diameter of 5 nm.

The negative active material was used to fabricate a negative electrode and a half-cell by the same procedure as in Example 1.

### (Comparative Example 1)

A negative active material was prepared by the same procedure as in Example 1, except that a porous hard carbon matrix with a porosity of 65 % was used. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 31.5 wt%, an amount of the silicon oxide was 58.5 wt%, and an amount of the soft carbon coating layer was 10 wt%. The silicon oxide had a particle diameter of 5 nm.

The negative active material was used to fabricate a negative electrode and a half-cell by the same procedure as in Example 1.

### (Comparative Example 2)

A negative active material was prepared by the same procedure as in Example 1, except that a porous hard carbon matrix with a porosity of 5 % was used. The prepared negative active material had a porous hard carbon matrix, silicon oxide (SiOₓ, where x is 2) positioned in the pores of the hard carbon matrix, and a soft carbon coating layer on a surface of the hard carbon matrix. An amount of the hard carbon matrix was 85.5 wt%, an amount of the silicon oxide was 4.5 wt%, and an amount of the soft carbon coating layer was 10 wt%. The silicon oxide had a particle diameter of 5 nm.

The negative active material was used to fabricate a negative electrode and a half-cell by the same procedure as in Example 1.

### (Comparative Example 3)

A porous hard carbon matrix (porosity: 50%) was added to a liquid tetraethyl orthosilicate (TEOS) to prepare a mixture.

The mixture was defoamed by vacuum reducing pressure of 10⁻⁶ MPa pressure.

The defoamed product was heat-treated at 600 °C for 5 hours under a N₂ atmosphere to prepare a negative active material.

The prepared negative active material had a porous hard carbon matrix and silicon oxide (SiOₓ, where x is 2) positioned in the pores of the hard carbon matrix. An amount of the hard carbon matrix was 50 wt%, an amount of the silicon oxide was 50 wt%. The silicon oxide had a particle diameter of 5 nm.

The negative active material was used to fabricate a negative electrode and a half-cell by the same procedure as in Example 1.

### (Experimental Example 1) Evaluation of charge and discharge capacity

The half-cells according to Examples 1 to 7 and Comparative Examples 1 to 3 were charged and discharged at 0.1 C once, and the charge and discharge capacities were measured. The discharge capacity is shown in Table 1.

### (Experimental Example 2) Evaluation of efficiency

The half-cells according to Examples 1 to 7 and Comparative Examples 1 to 3 were charged and discharged at 0.1 C once. A ratio of discharge capacity relative to charge capacity was calculated. The results are shown in Table 1.

### (Experimental Example 3) Evaluation of cycle-life characteristics

The half-cells according to Examples 1 to 7 and Comparative Examples 1 to 3 were charged and discharged at 1 C for 300 cycles. A ratio of discharge capacity at 300^{th} relative to discharge capacity at 1^{st} was calculated. The results are shown in Table 1, as a capacity retention.

**Table 1**

| | Porosity of matrix (%) | Type of silane compound | Amount of amorphous carbon coating layer (wt%) | Capacity (mAh/g) | Efficienc y (%) | Capacity retention (%) |
|---|---|---|---|---|---|---|
| Example 1 | 10 | TEOS | 10 | 427 | 84 | 83 |
| Example 2 | 50 | TEOS | 10 | 1216 | 82 | 79 |
| Example 3 | 60 | TEOS | 10 | 1393 | 79 | 77 |
| Example 4 | 50 | TEOS | 10 | 1223 | 83 | 78 |
| Example 5 | 50 | TMOS | 10 | 1309 | 81 | 78 |
| Example 6 | 50 | TEOS | 1 | 1233 | 81 | 76 |
| Example 7 | 50 | TEOS | 20 | 1201 | 83 | 79 |
| Comparative Example 1 | 65 | TEOS | 10 | 1421 | 77 | 32 |
| Comparative Example 2 | 5 | TEOS | 10 | 334 | 84 | 84 |
| Comparative Example 3 | 50 | TEOS | 0 | 1238 | 80 | 33 |

As shown in Table 1, Examples 1 to 7 using the negative active material including the porous carbon matrix with a porosity of 10 % to 60 % and an amorphous carbon coating layer exhibited excellent capacity, efficiency, and cycle-life characteristics.

Comparative Example 1 using the negative active material having the porous carbon matrix with a porosity of 65 % exhibited poor efficiency and significantly deteriorated cycle-life characteristics. Comparative Example 2 using the negative active material including the porous carbon matrix with a porosity of 5 % exhibited very low capacity.

Comparative Example 3 including the negative active material with no amorphous carbon coating layer exhibited significantly deteriorated cycle-life characteristics.

The term "combination thereof" may include a mixture, a laminate, a complex, a copolymer, an alloy, a blend, a reactant of constituents.

The term "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In the specification, "or" is not to be construed in an exclusive sense, for example, "A or B" may be interpreted to include A, B, A+B, or the like.

In the present disclosure, when a definition is not otherwise provided, a particle diameter or size may indicate an average particle diameter. The average particle diameter indicates an average particle diameter (D50) where a cumulative volume is about 50 volume% in a particle size distribution. The average particle size (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

By way of summation and review, generally, a crystalline carbon, such as graphite, is used as a negative active material in rechargeable lithium batteries. However, there is demand for higher energy density than can be, even theoretically, obtained from a crystalline carbon negative active material. As a result of this demand, research into a silicon-based active material is being conducted.

Silicon, however, has lower initial efficiency than crystalline carbon and worse cycle-life characteristics due to large changes in volume during charge and discharge. Thus, at this time, silicon-based active materials are limited in use.

Some embodiments provide a negative active material for a rechargeable lithium battery exhibiting excellent cycle-life characteristics.

Another embodiment provides a rechargeable lithium battery including the negative active material.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative active material (1) for a rechargeable lithium battery (100), the negative active material (1) comprising:
a porous amorphous carbon matrix (3) having a porosity of 10 % to 64 %, wherein the porosity is measured by a BJH method using a nitrogen adsorption method;
silicon oxide (5) distributed in pores of the porous amorphous carbon matrix (3); and
a coating layer (7) on a surface of the porous amorphous carbon matrix (3), the coating layer (7) comprising an amorphous carbon.

2. The negative active material (1) for a rechargeable lithium battery (100) as claimed in claim 1, wherein the porous amorphous carbon matrix (3) comprises a hard carbon matrix or a soft carbon matrix.

3. The negative active material (1) for a rechargeable lithium battery (100) as claimed in claim 1 or claim 2, wherein the porous amorphous carbon matrix (3) comprises a hard carbon matrix.

4. The negative active material (1) for a rechargeable lithium battery (100) as claimed in any one of claims 1 to 3, wherein the silicon oxide (5) is SiOₓ, where x is 0.9 to 2.0.

5. The negative active material (1) for a rechargeable lithium battery (100) as claimed in any one of claims 1 to 4, wherein the porosity of the porous amorphous carbon matrix (3) is 10 % to 60 %.

6. The negative active material (1) for a rechargeable lithium battery (100) as claimed in any one of claims 1 to 5, wherein the silicon oxide (5) has a particle diameter of 1 nm to 100 nm, wherein the particle diameter is an average particle diameter measured by a particle size analyzer, a transmission electron microscopic image, a scanning electron microscopic image, or a dynamic light-scattering measurement device.

7. The negative active material (1) for a rechargeable lithium battery (100) as claimed in any one of claims 1 to 6, wherein an amount of the silicon oxide (5) is 10 wt% to 60 wt% based on 100 wt% of the negative active material (1).

8. The negative active material (1) for a rechargeable lithium battery (100) as claimed in any one of claims 1 to 7, wherein an amount of the coating layer (7) is 1 wt% to 20 wt% based on 100 wt% of the negative active material (1).

9. The negative active material (1) for a rechargeable lithium battery (100) as claimed in any one of claims 1 to 8, wherein the amorphous carbon in the coating layer (7) comprises soft carbon.

10. The negative active material (1) for a rechargeable lithium battery (100) as claimed in any one of claims 1 to 9, wherein the silicon oxide (5) is amorphous silicon oxide.

11. A method of preparing a negative active material (1) for a rechargeable lithium battery (100) as claimed in any one of claims 1 to 10, the method comprising:
adding a porous amorphous carbon matrix (3) having a porosity of 10 % to 64 % to a liquid silane compound to prepare a mixture, wherein the porosity is measured by a BJH method using a nitrogen adsorption method;
defoaming the mixture to prepare a defoamed product;
mixing the defoamed product with an amorphous carbon precursor to prepare a mixed product; and
heat-treating the mixed product.

12. The method of preparing a negative active material (1) for a rechargeable lithium battery (100) as claimed in claim 11, wherein the porosity of the porous amorphous carbon matrix (3) is 10 % to 60 %.

13. The method of preparing a negative active material (1) for a rechargeable lithium battery (100) as claimed in claim 11 or claim 12, wherein the porous amorphous carbon matrix (3) comprises a hard carbon matrix or a soft carbon matrix.

14. The method of preparing a negative active material (1) for a rechargeable lithium battery (100) as claimed in any one of claims 11 to 13, wherein:
(i) the silane compound comprises tetraalkyl orthosilicate, tetraalkoxysilane, silicon tetrachloride, or combinations thereof; and/or
(ii) the heat-treatment is performed at 600 °C to 1,000 °C; and/or
(iii) the defoamed product is distributed in a solvent before being mixed with the amorphous carbon precursor; optionally wherein the solvent comprises water.

15. A rechargeable lithium battery (100), comprising:
a negative electrode (20) comprising the negative active material (1) of any one of claims 1 to 10;
a positive electrode (10); and
an electrolyte.

## Patentansprüche

1. Negatives Aktivmaterial (1) für eine wiederaufladbare Lithiumbatterie (100), wobei das negative Aktivmaterial (1) Folgendes umfasst:
eine poröse amorphe Kohlenstoffmatrix (3), die eine Porosität von 10 % bis 64 % aufweist, wobei die Porosität durch ein BJH-Verfahren unter Verwendung einer Stickstoffadsorptionsmessung bestimmt wird;
Siliziumoxid (5), das in Poren der porösen amorphen Kohlenstoffmatrix (3) verteilt ist; und
eine Beschichtung (7) auf einer Oberfläche der porösen amorphen Kohlenstoffmatrix (3), wobei die Beschichtung (7) einen amorphen Kohlenstoff umfasst.

2. Negatives Aktivmaterial (1) für eine wiederaufladbare Lithiumbatterie (100) nach Anspruch 1, wobei die poröse amorphe Kohlenstoffmatrix (3) eine harte Kohlenstoffmatrix oder eine weiche Kohlenstoffmatrix umfasst.

3. Negatives Aktivmaterial (1) für eine wiederaufladbare Lithiumbatterie (100) nach Anspruch 1 oder Anspruch 2, wobei die poröse amorphe Kohlenstoffmatrix (3) eine harte Kohlenstoffmatrix umfasst.

4. Negatives Aktivmaterial (1) für eine wiederaufladbare Lithiumbatterie (100) nach einem der Ansprüche 1 bis 3, wobei das Siliziumoxid (5) SiOₓist, wobei x 0,9 bis 2,0 beträgt.

5. Negatives Aktivmaterial (1) für eine wiederaufladbare Lithiumbatterie (100) nach einem der Ansprüche 1 bis 4, wobei die Porosität der porösen amorphen Kohlenstoffmatrix (3) 10 % bis 60 %.

6. Negatives Aktivmaterial (1) für eine wiederaufladbare Lithiumbatterie (100) nach einem der Ansprüche 1 bis 5, wobei das Siliziumoxid (5) einen Partikeldurchmesser von 1 nm bis 100 nm aufweist, wobei der Partikeldurchmesser ein durchschnittlicher Partikeldurchmesser ist, der mit einem Partikelgrößenanalysator, einem transmissionselektronenmikroskopischen Bild, einem rasterelektronenmikroskopischen Bild oder einer dynamischen Lichtstreuungsmessvorrichtung gemessen wird.

7. Negatives Aktivmaterial (1) für eine wiederaufladbare Lithiumbatterie (100) nach einem der Ansprüche 1 bis 6, wobei eine Menge des Siliziumoxids (5) 10 Gew.-% bis 60 Gew.-%, bezogen auf 100 Gew.-% des negativen Aktivmaterials (1), beträgt.

8. Negatives Aktivmaterial (1) für eine wiederaufladbare Lithiumbatterie (100) nach einem der Ansprüche 1 bis 7, wobei eine Menge der Beschichtungsschicht (7) 1 Gew.-% bis 20 Gew.-%, bezogen auf 100 Gew.-% des negativen Aktivmaterials (1), beträgt.

9. Negatives Aktivmaterial (1) für eine wiederaufladbare Lithiumbatterie (100) nach einem der Ansprüche 1 bis 8, wobei der amorphe Kohlenstoff in der Beschichtungsschicht (7) Weichkohlenstoff umfasst.

10. Negatives Aktivmaterial (1) für eine wiederaufladbare Lithiumbatterie (100) nach einem der Ansprüche 1 bis 9, wobei das Siliziumoxid (5) amorphes Siliziumoxid ist.

11. Verfahren zum Herstellen eines negativen Aktivmaterials (1) für eine wiederaufladbare Lithiumbatterie (100) nach einem der Ansprüche 1 bis 10, wobei das Verfahren umfasst:
Hinzufügen einer porösen amorphen Kohlenstoffmatrix (3) mit einer Porosität von 10 % bis 64 % zu einer flüssigen Silanverbindung, um eine Mischung herzustellen, wobei die Porosität durch ein BJH-Verfahren unter Verwendung eines Stickstoffadsorptionsverfahrens gemessen wird;
Entschäumen der Mischung zur Herstellung eines entschäumten Produkts;
Mischen des entschäumten Produkts mit einem amorphen Kohlenstoffvorläufer zur Herstellung eines Mischprodukts; und
Wärmebehandlung des gemischten Produkts.

12. Verfahren zum Herstellen eines negativen Aktivmaterials (1) für eine wiederaufladbare Lithiumbatterie (100) nach Anspruch 11, wobei die Porosität der porösen amorphen Kohlenstoffmatrix (3) 10 % bis 60 %.

13. Verfahren zum Herstellen eines negativen Aktivmaterials (1) für eine wiederaufladbare Lithiumbatterie (100) nach Anspruch 11 oder 12, wobei die poröse amorphe Kohlenstoffmatrix (3) eine harte Kohlenstoffmatrix oder eine weiche Kohlenstoffmatrix umfasst.

14. Verfahren zum Herstellen eines negativen Aktivmaterials (1) für eine wiederaufladbare Lithiumbatterie (100) nach einem der Ansprüche 11 bis 13, wobei:
(i) die Silanverbindung Tetraalkylorthosilikat, Tetraalkoxysilan, Siliziumtetrachlorid oder Kombinationen davon umfasst; und/oder
(i) die erste Wärmebehandlung bei 600 °C bis 1000 °C durchgeführt wird; und/oder
(iii) das entschäumte Produkt in einem Lösungsmittel verteilt wird, bevor es mit dem amorphen Kohlenstoffvorläufer vermischt wird; wobei das Lösungsmittel optional Wasser umfasst.

15. Wiederaufladbare Lithiumbatterie (100), umfassend
eine negative Elektrode (20), die das negative Aktivmaterial (1) nach einem der Ansprüche 1 bis 10 umfasst;
eine Positivelektrode (10); und
einen Elektrolyt.

## Revendications

1. Matériau actif négatif (1) pour une batterie au lithium rechargeable (100), le matériau actif négatif (1) comprenant :
une matrice de carbone amorphe poreuse (3) présentant une porosité de 10 % à 64 %, dans lequel la porosité est mesurée par un procédé BJH utilisant un procédé d'adsorption d'azote ;
de l'oxyde de silicium (5) distribué dans des pores de la matrice de carbone amorphe poreuse (3) ; et
une couche de revêtement (7) sur une surface de la matrice de carbone amorphe poreuse (3), la couche de revêtement (7) comprenant un carbone amorphe.

2. Matériau actif négatif (1) pour une batterie au lithium rechargeable (100) selon la revendication 1, dans lequel la matrice de carbone amorphe poreuse (3) comprend une matrice de carbone dure ou une matrice de carbone souple.

3. Matériau actif négatif (1) pour une batterie au lithium rechargeable (100) selon la revendication 1 ou la revendication 2, dans lequel la matrice de carbone amorphe poreuse (3) comprend une matrice de carbone dure.

4. Matériau actif négatif (1) pour une batterie au lithium rechargeable (100) selon l'une quelconque des revendications 1 à 3, dans lequel l'oxyde de silicium (5) est SiOₓ, x étant de 0,9 à 2,0.

5. Matériau actif négatif (1) pour une batterie au lithium rechargeable (100) selon l'une quelconque des revendications 1 à 4, dans lequel la porosité de la matrice de carbone amorphe poreuse (3) est de 10 % à 60 %.

6. Matériau actif négatif (1) pour une batterie au lithium rechargeable (100) selon l'une quelconque des revendications 1 à 5, dans lequel l'oxyde de silicium (5) présente un diamètre de particule de 1 nm à 100 nm, dans lequel le diamètre de particule est un diamètre de particule moyen mesuré par un analyseur de taille de particule, une image microscopique d'électron à transmission, une image microscopique d'électron à balayage ou un dispositif de mesure de dispersion de lumière dynamique.

7. Matériau actif négatif (1) pour une batterie au lithium rechargeable (100) selon l'une quelconque des revendications 1 à 6, dans lequel une quantité de l'oxyde de silicium (5) est de 10 % en poids à 60 % en poids sur la base de 100 % en poids du matériau actif négatif (1).

8. Matériau actif négatif (1) pour une batterie au lithium rechargeable (100) selon l'une quelconque des revendications 1 à 7, dans lequel une quantité de la couche de revêtement (7) est de 1 % en poids à 20 % en poids sur la base de 100 % en poids du matériau actif négatif (1).

9. Matériau actif négatif (1) pour une batterie au lithium rechargeable (100) selon l'une quelconque des revendications 1 à 8, dans lequel le carbone amorphe dans la couche de revêtement (7) comprend du carbone souple.

10. Matériau actif négatif (1) pour une batterie au lithium rechargeable (100) selon l'une quelconque des revendications 1 à 9, dans lequel l'oxyde de silicium (5) est de l'oxyde de silicium amorphe.

11. Procédé de préparation d'un matériau actif négatif (1) pour une batterie au lithium rechargeable (100) selon l'une quelconque des revendications 1 à 10, le procédé comprenant :
l'ajout d'une matrice de carbone amorphe poreuse (3) présentant une porosité de 10 % à 64 % à un composé de silane liquide pour préparer un mélange, dans lequel la porosité est mesurée par un procédé BJH utilisant un procédé d'adsorption d'azote ;
le démoussage du mélange pour préparer un produit démoussé ;
le mélange du produit démoussé avec un précurseur de carbone amorphe pour préparer un produit mélangé ; et
le traitement thermique du produit mélangé.

12. Procédé de préparation d'un matériau actif négatif (1) pour une batterie au lithium rechargeable (100) selon la revendication 11, dans lequel la porosité de la matrice de carbone amorphe poreuse (3) est de 10 % à 60 %.

13. Procédé de préparation d'un matériau actif négatif (1) pour une batterie au lithium rechargeable (100) selon la revendication 11 ou la revendication 12, dans lequel la matrice de carbone amorphe poreuse (3) comprend une matrice de carbone dure ou une matrice de carbone souple.

14. Procédé de préparation d'un matériau actif négatif (1) pour une batterie au lithium rechargeable (100) selon l'une quelconque des revendications 11 à 13, dans lequel :
(i) le composé de silane comprend de l'orthosilicate de tétraalkyle, du tétraalcoxysilane, du tétrachlorure de silicium ou des combinaisons de ceux-ci ; et/ou
(ii) le traitement thermique est réalisé à 600 °C à 1000 °C ; et/ou
(iii) le produit démoussé est distribué dans un solvant avant d'être mélangé avec le précurseur de carbone amorphe ; facultativement dans lequel le solvant comprend de l'eau.

15. Batterie au lithium rechargeable (100) comprenant :
une électrode négative (20) comprenant le matériau actif négatif (1) selon l'une quelconque des revendications 1 à 10 ;
une électrode positive (10) ; et
un électrolyte.
